# EUROPÄISCHE PATENTSCHRIFT

(11) **EP 1 573 155 B1**
(45) Veröffentlichungstag und Bekanntmachung des Hinweises auf die Patenterteilung: **16.08.2006**
(21) Anmeldenummer: 03788969.8
(22) Anmeldetag: 25.10.2003
(51) Int. Cl.: E05B 17/04, E05B 53/00, F16C 1/02

(54) **BETÄTIGUNGSVORRICHTUNG FÜR EIN SCHLOSS VON TÜREN ODER KLAPPEN EINES FAHRZEUGS**
OPERATING DEVICE FOR A LOCK FOR DOORS OR BONNETS ON A MOTOR VEHICLE
DISPOSITIF D'ACTIONNEMENT POUR UNE SERRURE DE PORTIERES, HAYON OU TRAPPE D'UN VEHICULE

(30) Priorität: 19.12.2002 DE 10260076
(43) Veröffentlichungstag der Anmeldung: 14.09.2005
(73) Patentinhaber: Huf Hülsbeck & Fürst GmbH & Co. KG, 42551 Velbert (DE)
(72) Erfinder: VELICANIN, Mensur, 42555 Velbert (DE)
(74) Vertreter: Mentzel, Norbert
(86) Internationale Anmeldenummer: PCT/EP2003/011888
(87) Internationale Veröffentlichungsnummer: WO 2004/057136

(56) Entgegenhaltungen:
- EP-A- 0 889 252
- EP-A- 1 405 971
- DE-A- 10 158 383
- DE-A- 19 527 837
- DE-A- 19 649 905
- DE-C- 925 027
- FR-A- 1 175 848
- FR-A- 2 833 662
- NL-A- 6 408 413
- US-A- 6 012 494

## Beschreibung

Die Erfindung richtet sich auf eine Betätigungsvorrichtung der im Oberbegriff von Anspruch 1 genannten Art. Während der Schließzylinder mit seinem Stirnende für den Schlüssel von der Außenseite aus zugänglich ist, befindet sich das Schloss im Türinneren. Der Schließzylinder besteht aus einem schlüsselbetätigbaren Rotor, der in einem ortsfesten Stator der Tür drehgelagert ist. Die im Oberbegriff von Anspruch 1 genannte Welle hat die Aufgabe, das auf den Rotor des Schließzylinders ausgeübte Drehmoment auf die Schlossglieder zu übertragen. Dabei kommt es häufig vor, dass die Achse des zylinderseitigen Rotors nicht nur gegenüber der Drehachse zur Betätigung der Schlossglieder axial beabstandet, sondern auch radial versetzt ist.

Es ist eine Betätigungsvorrichtung bekannt, (DE 195 27 837 C 2), bei welcher die Welle aus einer starren Stange mit endseitigen Gelenkteilen bestehen, welche zum zylinderseitigen Rotor hin einerseits und zu den Schlossgliedern andererseits jeweils Bestandteil von zwei Kardangelenken sind. Wenn die Orte des Schlosses und der Schließzylinder vorgegeben sind, ist der Verlauf der gradlinigen Welle im Türinneren festgelegt. Ein solcher Wellenverlauf kann aber mit dazwischen liegenden Türelementen kollidieren oder die Montage und Demontage von Tür- oder Schlosselementen erschweren.

Günstiger ist dann eine Vorrichtung der im Oberbegriff in Anspruch 1 angegebenen Art (FR 1 175 848 oder DE 196 49 905 C 2). Hier wird eine biegsame Welle verwendet, die zwischen der Achse des Schließzylinders und der Achse der Schlossglieder einen beliebigen bogenförmigen Verlauf einnehmen kann. Diese bekannte Welle besteht aus einem gewendelten Draht. Je leichter die Welle verbogen werden soll, um so dünner muss die Drehstärke und/oder nachgiebiger das Drahtmaterial gewählt werden. Das kann bei der Übertragung des Drehmomentes zu einem Torsionsschlupf zwischen den beiden Enden der Drahtwendel führen. Dies gilt insbesondere dann, wenn die Drehmomente gegen einen die Drehung behindernden großen Widerstand ausgeführt werden müssen.

Es ist bei einem rohrförmigen Längselement zur Übertragung von Kräften bekannt (EP 0 889 252 A2) abwechselnd von verschiedenen Seiten nur einen einzigen Einschnitt in die Rohrwand einzulassen, wodurch in der gegenüberliegenden Rohrwand ein Kreissegment verbleibt.

Der Erfindung liegt die Aufgabe zugrunde, eine preiswerte zuverlässige Vorrichtung der im Oberbegriff von Anspruch 1 genannten Art zu entwickeln, welche bei guter Übertragung von Drehmomenten die Biegsamkeit der Welle verbessert. Dies wird erfindungsgemäß durch die im Anspruch 1 angegebenen Maßnahmen erreicht, denen folgende besondere Bedeutung zukommt.

Die von gegenüberliegenden Seiten in die Welle paarweise eingelassenen Kerben lassen im Bereich der Wellenachse jeweils einen Steg entstehen, der sich mit seiner Steglänge im wesentlichen über den ganzen Durchmesser der Welle erstreckt. Das ist für die Übertragung von Drehmomenten günstig. Weil die Kerben von diametral gegenüberliegenden Seiten in die Welle eingelassen sind, verbleiben zwischen den Stegen ein axial durchlaufender Kern in der Welle, der die gute Biegsamkeit ebenso fördert, wie die im wesentlichen zueinander parallel und radial zur Wellenachse verlaufenden Flanken der Kerben-Paare. Diese parallelen Flanken können nämlich bei der Biegebeanspruchung aufeinander zu und voneinander weg bewegt werden, wodurch auch kleine Biegeradien in der erfindungsgemäßen Biegewelle erzeugt werden können. Die Herstellung derartiger Biegewellen aus biegsamen Kunststoff ist sehr einfach und lässt sich ohne Weiteres im Spritzgussverfahren herstellen. An den Enden der erfindungsgemäßen Biegewelle ist ein Mitnehmer zur Betätigung des Schlosses und/oder ein Anschluss für den Schließzylinder einstückig mit der Welle ausgebildet.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1,: in Vergrößerung, die erfindungsgemäße Welle in perspektivischer Darstellung, wobei ein Anschluss für den Schließzylinder und ein Mitnehmer zur Betätigung des Schlosses gleich angeformt worden sind,
- Fig. 2: die Draufsicht auf die Welle von Fig. 1,
- Fig. 2a + 2b: zwei Querschnitte durch die Welle von Fig. 2 längs der dortigen Schnittlinien IIa - IIa bzw. IIb - IIb,
- Fig. 3: einen Längsschnitt durch die Welle von Fig. 2 längs der dortigen Schnittlinie III - III.

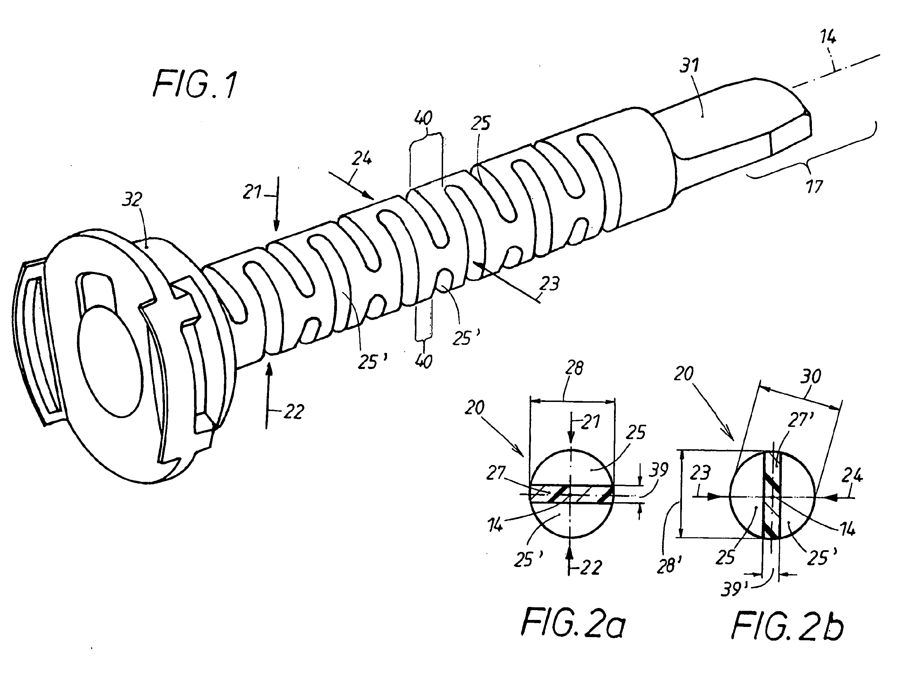

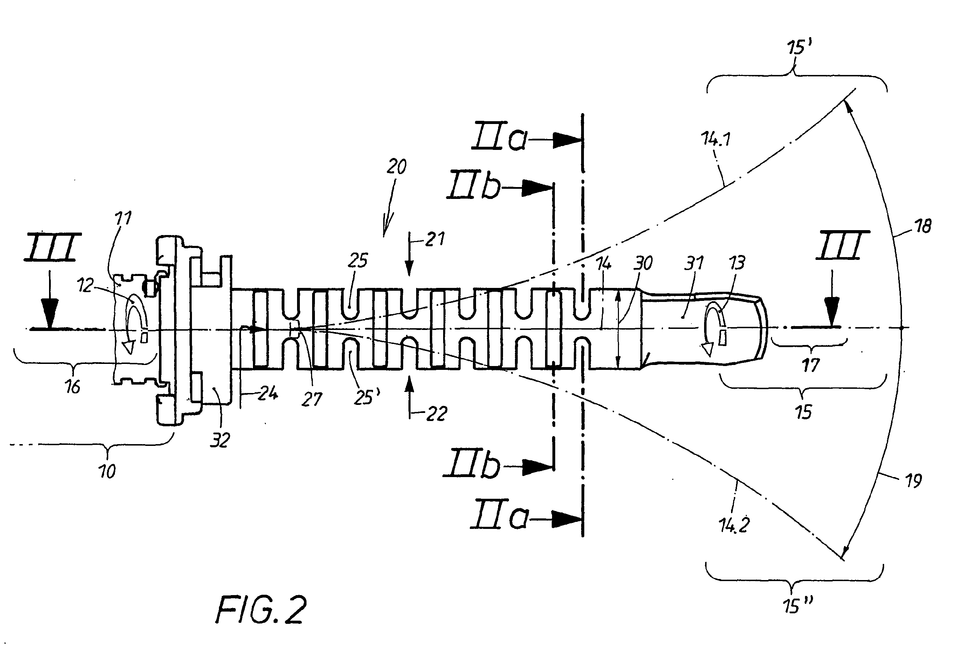

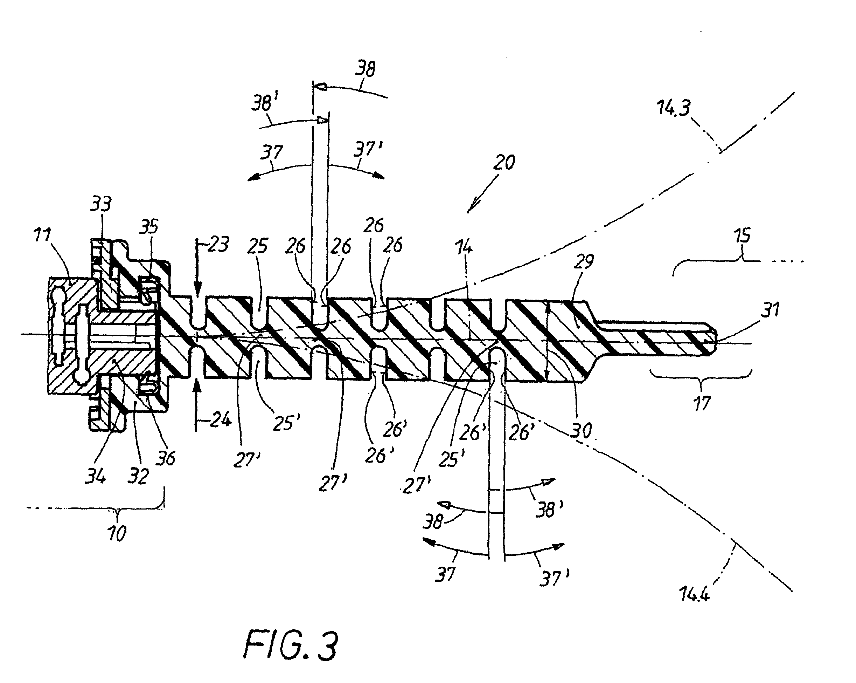

Es wird zunächst auf Fig. 2 Bezug genommen. Zwischen einem Schließzylinder 10, von dem lediglich ein Bruchstück seines Rotors 11 gezeigt ist, und nicht näher gezeigten, bei 15 angeordneten Schlossgliedern ist eine besondere Welle 20 angeordnet. Die Welle 20 ist in der Lage, ein am Rotor 11 ausgeübtes, durch den Drehpfeil 12 veranschaulichtes Eingangs-Drehmoment in ein durch den Pfeil 13 verdeutlichtes Ausgangs-Drehmoment 13 zu übertragen. In allen Figuren ist die Welle 20 in gestrecktem Zustand dargestellt, was durch den geradlinigen Verlauf der Wellenachse 14 zum Ausdruck kommt. In diesem Fall ist die Rotorwelle 16 mit dem Wellenausgang 17 axial ausgerichtet. Wenn die Schlossglieder 15 aber eine gegenüber der Rotorwelle 16 nicht nur axial beabstandete sondern auch radial versetzte Lage bei 15' bzw. 15" einnehmen, dann kann die Welle 20 um den Winkel 18 bzw. 19 gegenüber der Strecklage 14 in alle vier Richtungen 21 bis 24 in den bogenförmigen Verlauf 14.1 bis 14.4 überführt werden, wie aus Fig. 2 und 3 zu erkennen ist. Die Welle 20 hat also die Aufgabe, nicht nur den axialen Abstand zwischen dem Schließzylinder 10 und dem Schloss 15 bzw. 15' bzw. 15" zu überbrücken, sondern auch einen radialen Versatz 18, 19 zwischen der Rotorachse 16 und den entsprechenden Wellenausgängen gegenüber den Schlossgliedern 15' und 15" auszugleichen. Dazu ist die Welle 20 in folgender besonderer Weise ausgebildet.

Die Welle 20 besteht aus biegefähigem Material 29. Von jeweils vier rechtwinklig zueinander angeordneten Seiten 21 bis 24 werden Kerben 25, 25' in die Welle 20 eingelassen. Und zwar wird jeweils ein Paar 25, 25' solcher Kerben von zwei einander diametral gegenüberliegenden Seiten 21, 22 und 23, 24 eingebracht. Die Kerben 25, 25' verlaufen senkrecht zur gestreckten Wellenachse 14 und besitzen zueinander im wesentlichen parallel verlaufende Flanken 26, 26 bzw. 26', 26'.

Wie aus den Querschnitten von Fig. 2a und 2b zu erkennen ist, entstehen zwischen den Kerben-Paaren 25, 25' Stege 27 bzw. 27', die zueinander senkrecht stehen. Die Stege 27, 27' sind im Bereich der Wellenachse 14 angeordnet und weisen ein Flachprofil auf. Dadurch haben die Stege 27, 27' eine radiale Länge 28, 28', die praktisch dem Durchmesser 30 der Welle 20 entspricht. Zwischen aufeinanderfolgenden Kerben-Paaren 25, 25', die abwechselnd von diametral gegenüberliegenden Seiten 21, 22 und 23, 24 eingebracht worden sind, verbleiben axiale Zwischenstücke 40, die vollen Wellenquerschnitt aufweisen.

An beiden Wellenenden sind die einerseits mit dem Rotor 11 und andererseits mit dem Schloss 5 zusammenwirkenden Elemente einstückig aus dem gleichen Kunststoffmaterial 29 angeformt. So befindet sich am Wellen-Innenende ein Mitnehmer 31 zur Betätigung des Schlosses 15. Es hat die Form eines Paddels. Am Außenende der Welle ist ein Anschluss 32 für den Zylinderkern 11 des Schließzylinders 10 vorgesehen. Der Anschluss 32 hat die Form einer Gehäuseschale. In die Gehäuseschale dieses Anschlusses 32 ist ein Überlastglied 33 integriert, welches drehfest mit dem Abgang 34 des Rotors 11 ist. Der Rotor-Abgang 34 ist außerdem axialfest mit dem Gehäuse-Anschluss 32 verbunden. Dazu dient ein aus Fig. 3 ersichtlicher Sprengring 35, der in eine hinterschnittene Ringnut 36 eingreift. Das Überlastglied 23 ist aber auch mit dem Anschluss 32 in drehfester Verbindung, wenn auf den Rotor 11 über den steckenden Schlüssel die erwähnten Drehmomente 12 ausgeübt werden, die in jedem Fall unter eines bestimmten Schwellenwertes liegen. Wenn die Welle 20 mittels Einbruchswerkzeuge manipuliert wird, wird dieser Schwellenwert überschritten und das Überlastglied 33 in Freilauf gegenüber dem Anschluss 32 gesetzt. Dadurch werden gewaltsame Drehungen des Rotors 11 nicht auf die Welle 20 übertragen.

Die Stege 27, 27' sorgen für eine gute Biegefähigkeit der Welle 20 und fungieren als Biegestellen, was anhand der Fig. 3 gut zu erkennen ist. Wie aus Fig. 2a, 2b hervorgeht, besitzen die Stege 27 bzw. 27' eine verhältnismäßig geringe Dicke 39, 39'. Eine Biegebeanspruchung der Welle in Richtung der Biegelinie 14.4 ergibt sich, weil die Flanken 26 der Kerben 25 sich im Sinne der Pfeile 37, 37' voneinander wegbewegen. Es findet hier eine Aufklappbewegung der Flanken 26 an den Stegen 27' statt. Die gegensinnige Bewegung findet dabei an der diametral gegenüberliegenden Kerbe 25' statt. Hier werden bei der Biegung im Sinne der Biegelinie 14.4 von Fig. 3 die beiden Flanken 26', 26' im Sinne der Pfeile 38, 38' aufeinander zubewegt. Der Steg 27' wirkt wie ein "Filmscharnier".

Dennoch ist das Flachprofil 28, 39 bzw. 28', 39' der beiden Stege 27, 27' ausreichend, um die genannten Drehmomente 12 im Bereich des Rotors 11 auf den Wellenausgang 17 zu übertragen. Das Ausgangs-Drehmoment 13 ist dem Eingangs-Drehmoment 12 im wesentlichen gleich. Ein Torsionsschlupf der Welle 20 findet wegen der maximal möglichen großen Steglänge 28, 28' nicht statt.

Bei einer im Sinne der Biegelinie 14.3 von Fig. 3 erfolgenden Biegebeanspruchung der Welle 20 ergeben sich bei den Flanken 26, 26' der beiden Kerben 25, 25' die spiegelbildlichen Verhältnisse. Die Kerbflanken 26 werden im Sinne der Pfeile 38, 38' von Fig. 3 gegeneinander geklappt, während die gegenüberliegenden Kerbflanken 26', 26' eine Aufklappbewegung im Sinne der Pfeile 37, 37' erfahren. Das Entsprechende geschieht, wenn die Biegebeanspruchungen im Sinne der beiden weiteren Biegelinien 14.1 und 14.2 von Fig. 2 erfolgen.

### Bezugszeichenliste :

- 10: Schließzylinder
- 11: Rotor
- 12: Eingangs-Drehmoment von 20
- 13: Ausgangs-Drehmoment von 20
- 14: Wellenachse von 20
- 14.1: Biegeverlauf von 14 in Richtung 21 (Fig. 2)
- 14.2: Biegeverlauf von 14 in Richtung 22 (Fig. 2)
- 14.3: Biegeverlauf von 14 in Richtung 23 (Fig. 3)
- 14.4: Biegeverlauf von 14 in Richtung 24 (Fig. 3)
- 15: Lage der Schlossglieder, ausgerichtet (Fig. 2)
- 15': Lage von 15 nach oben versetzt (Fig. 2)
- 15": Lage von 15 nach unten versetzt (Fig. 2)
- 16: Rotorwelle von 11
- 17: Wellenausgang von 20, Innenende von 14
- 18: erster Winkel von 14' gegenüber 14 (Fig. 2)
- 19: zweiter Winkel von 14" gegenüber 14 (Fig. 2)
- 20: Welle
- 21: obere Seite von 20 für 25
- 22: untere Seite von 20 für 25'
- 23: linke Seite von 20 für 25
- 24: rechte Seite von 20 für 25'
- 25, 25': Kerbe bei 21, 23 bzw. 22, 24
- 26, 26': Flanke von 25 bzw. 25'
- 27, 27': Steg zwischen 25, 25 bzw. 25', 25'
- 28: Radiallänge von 27, Flachprofil von 27
- 28': Radiallänge von 27', Flachprofil von 27'
- 29: biegefähiges Kunststoffmaterial von 20
- 30: Durchmesser von 20
- 31: Mitnehmer an 20 für 15
- 32: Anschluss an 20 für 11
- 33: Überlastglied bei 32
- 34: Abgang von 11
- 35: Sprengring bei 34 (Fig. 3)
- 36: Ringnut in 32 (Fig. 3)
- 37, 37': Pfeil der Aufklappbewegung von 26 bzw. 26' (Fig. 3)
- 38, 38': Pfeil der Zuklappbewegung von 26 bzw. 26' (Fig. 3)
- 39, 39': Dicke von 27, 27', Flachprofil
- 40: axiales Zwischenstück von 20

## Patentansprüche

1. Betätigungsvorrichtung für ein Schloss an einer Tür oder einer Klappe eines Fahrzeugs,
mit einem Schließzylinder (10), mit einem in axialem Abstand dazu angeordneten Schloss (15) und mit einer dazwischen geschalteten Welle (20),
welche bei Drehbetätigung des Schließzylinders (10) ein Drehmoment (12) auf das Schloss (15) überträgt (13),
wobei die Welle (20) in ihrer Achsrichtung (14) verbiegbar (14.1 bis 14.4) ist, um einen radialen Versatz (18, 19) zwischen der Achse (16) des Schließzylinders (10) und dem Schloss (15) auszugleichen,
**dadurch gekennzeichnet,**
**dass** die einstückige Welle (20) aus biegefähigem Material (29) besteht und eine Schar von quer zur Wellenachse (14) verlaufenden Kerben (25, 25' aufweist,
die paarweise (25, 25') von zwei einander diametral gegenüberliegenden Seiten (21, 22 und 23, 24) aus in die Welle (20) eingelassen sind,
**dass** - bei gestreckter Welle (20) - die beiden Flanken (26, 26; 26', 26') der Kerben (25, 25') im wesentlichen zueinander parallel und radial zur Wellenachse (14) verlaufen,
**dass** die Kerben-Paare (25, 25') zwischen ihren Flanken (26, 26; 26', 26') einen Steg (27, 27') in der Welle (20) belassen,
der im Bereich der Wellenachse (14) angeordnet ist und sich im wesentlichen über den ganzen Durchmesser (30) der Welle (20) erstreckt,
**dass** die Stege (27, 27') Biegestellen erzeugen, an welchen bei Biegebeanspruchungen der Welle (20) die beiden Flanken (26, 26; 26', 26') der Kerben-Paare (25, 25') aufeinander zu (38, 38') oder voneinander weg (37, 37') bewegbar sind,
**dass** in Richtung der Wellen-Achse (14) zwischen zwei diametralen Kerben-Paaren (25, 25') axiale Zwischenstücke (40) mit vollem Wellenquerschnitt (40) stehen bleiben,
und **dass** ein Mitnehmer (31) zum Betätigen des Schlosses (15 bzw. 15' bzw. 15") und/oder ein Anschluss (32) für den Schließzylinder (10) mit der Welle (20) einstückig ausgebildet sind.

2. Vorrichtung nach Anspruch 1, **dadurch gekennzeichnet, dass** der Mitnehmer (31) die Form eines Paddels hat.

3. Vorrichtung nach Anspruch 1 oder 2, **dadurch gekennzeichnet, dass** in den Anschluss (32) ein Überlastglied (33) integriert ist,
welches bei normaler Schlüsselbetätigung des Schließzylinders (10) für eine drehfeste Verbindung zwischen dem Zylinderkern (11) und dem Anschluss (32) vom Außenende der Welle (20) sorgt.
dass aber bei einer gewaltsamen Betätigung des Schließzylinders (10) durch Einbruchswerkzeuge, bei welcher eine bestimmte Drehmoment-Grenze überschritten wird, das Überlastglied (33) für einen Freilauf zwischen dem Zylinderkern (11) und dem Mitnehmer (31) für das Schloss (15) sorgt.

## Claims

1. Actuating device for a lock in a door or hatch of a motor vehicle,
- with a lock cylinder (10), which has a lock (15) located a certain axial distance away and a shaft (20) extending between it and the lock;
- which shaft transmits (13) a torque (12) to the lock (15) when the lock cylinder (10)is rotated;
- where the shaft (20) is flexible (14.1 to 14.4) in its axial direction (14) to compensate for a radial offset (18, 19) between the axis (16) of the lock cylinder (10) and the lock (15), **characterised in that**
- the one-piece shaft (20) is made of flexible material (29) and has a set of notches (25, 25') extending transversely to the axis (14) of the shaft;
- which notches are recessed in pairs (25, 25') into the shaft (20) from diametrically opposing sides (21, 22 and 23, 24); **in that**
- when the shaft (20) is stretched out straight, the two flanks (26, 26; 26', 26') of the notches (25, 25') are essentially parallel to each other and extend radially with respect to the axis (14) of the shaft; **in that**
- the pairs of notches (25, 26') leave a web (27, 27') in the shaft (20) between their flanks (26, 26; 26', 26');
- which web is located in the region of the axis (14) of the shaft and extends essentially across the entire diameter (30) of the shaft (20); **in that**
- the webs (27, 27') produce flex points, at which, when bending load is exerted on the shaft (20), the two flanks (26, 26; 26', 26') of the pairs of notches (25, 25') can swing toward (38, 38') or away (37, 37') from each other; **in that**
- intermediate axial pieces (40), extending in the axial direction (14) of the shaft and with the full cross section of the shaft (40), remain between successive pairs of diametrically opposing notches (25, 25'); and **in that**
- a driver (31) for actuating the lock (15 or 15' or 15") and/or a connection (32) for the lock cylinder (10) is formed integrally on the shaft (20).

2. Device according to claim 1, **characterised in that** the driver (31) has the form of a paddle.

3. Device according to claim 1 or claim 2, **characterised in that** an overload element (33) is integrated into the connection (32),
- which overload element, when the lock cylinder (10) is actuated as normal by the key, ensures a nonrotatable connection between the cylinder core (11) and the connection (32) at the outer end of the shaft (20), but also in that,
- when the lock cylinder (10) is actuated forcibly by means of a break-in tool, as a result of which a specific torque limit is exceeded, the overload element (33) lets the cylinder core (11) and the driver (31) for the lock (15) rotate freely with respect to each other.

## Revendications

1. Dispositif d'actionnement pour une serrure sur une portière ou un volet d'un véhicule,
avec un cylindre de fermeture (10), avec une serrure (15), disposée à distance axiale de celui-ci, et avec un arbre (20) en position intermédiaire,
qui, en cas d'actionnement par rotation du cylindre de fermeture (10), transmet (13) un couple de rotation (12) à la serrure (15),
l'arbre (20) étant susceptible d'être déformé (14.1 à 14.4) dans sa direction axiale (14), pour compenser le décalage radial (18, 19) entre l'axe (16) du cylindre de fermeture (10) et la serrure (15),
**caractérisé en ce que**
l'arbre (20) monobloc est formé d'un matériau (29) flexible et présente un groupe d'entailles (25, 25'), s'étendant transversalement à l'axe d'arbre (14),
qui sont creusées par paires (25, 25'), depuis deux faces (21, 22 et 23, 24) diamétralement opposées l'une à l'autre, dans l'arbre (20),
**en ce que** - lorsque l'arbre (20) est rectiligne - les deux flancs (26, 26 ; 26', 26') des entailles (25, 25') s'étendent sensiblement parallèlement l'un à l'autre et radialement par rapport à l'axe d'arbre (14),
**en ce que** les paires d'entailles (25, 25') laissent, entre leurs flancs (26, 26 ;26', 26'), une nervure (27, 27') dans l'arbre (20),
qui est disposée dans la zone de l'axe d'arbre (14) et s'étend sensiblement sur tout le diamètre (30) de l'arbre (20),
**en ce que** les nervures (27, 27') produisent des points de flexion, auxquels, en cas de sollicitation en flexion de l'arbre (20), les deux flancs (26, 26 ; 26', 26') des paires d'entailles (25, 25') sont déplaçables, en se rapprochant l'un de l'autre (38, 38') ou en s'écartant l'un de l'autre (37, 37'),
**en ce que** subsistent, dans la direction de l'axe d'arbre (14), entre deux paires d'entailles (25, 25') diamétrales, des éléments intermédiaires axiaux (40) ayant une pleine section transversale d'arbre (40),
et **en ce qu'**un organe d'entraînement (31) est réalisé d'une seule pièce, pour assurer l'actionnement de la serrure (15 ou 15' ou 15") et/ou un raccordement (32), pour le cylindre de fermeture (10) à l'arbre (20).

2. Dispositif selon la revendication 1, **caractérisé en ce que** l'organe d'entraînement (31) a la forme d'une pale.

3. Dispositif selon la revendication 1 ou 2, **caractérisé en ce que**, dans le raccordement (32), est intégré un organe de surcharge (33),
qui, en cas d'actionnement normal par la clé du cylindre de fermeture (10), veille à assurer une liaison assujettie en rotation entre le coeur de cylindre (11) et le raccordement (32), depuis l'extrémité extérieure de l'arbre (20),
mais **en ce que**, en cas d'actionnement forcé du cylindre de fermeture (10) par utilisation d'outils d'effraction, actionnement pour lequel il y a dépassement d'une limite déterminée de couple de rotation, l'organe de surcharge (33) veille à assurer un mouvement fou, entre le coeur de cylindre (11) et l'organe d'entraînement (31) pour la serrure (15).
